# EUROPEAN PATENT APPLICATION

(11) **EP 4 386 324 A1**
(43) Date of publication of application: **19.06.2024**
(21) Application number: 22879910.2
(22) Date of filing: 14.07.2022
(51) Int. Cl.: G01C 21/34, G06N 20/00

(54) **METHOD AND APPARATUS FOR IDENTIFYING ROAD INFORMATION, ELECTRONIC DEVICE, VEHICLE, AND MEDIUM**

(30) Priority: 14.10.2021 CN 202111197941
(71) Applicant: Huawei Technologies Co., Ltd., Shenzhen, Guangdong 518129 (CN)
(72) Inventor: CHEN, Zhe, Shenzhen, Guangdong 518129 (CN); WEN, Feng, Shenzhen, Guangdong 518129 (CN); LIU, Zhenbo, Shenzhen, Guangdong 518129 (CN)
(74) Representative: Isarpatent
(86) International application number: PCT/CN2022/105672
(87) International publication number: WO 2023/060963

(57) **Abstract**

A road information identification method and apparatus are provided, pertain to the field of artificial intelligence technologies, and relate to a road identification technology in the technical field. Specifically, the road information identification method includes: receiving road environment data of a plurality of modalities, where a road environment includes an environment of a lane area and an environment of a lane-free area (S 110); performing topology parsing based on the road environment data of the plurality of modalities, to obtain a lane-level topology connection relationship of a road, where the lane-level topology connection relationship of the road indicates a mutual location relationship between lanes on the road and a connection status of the lanes (S120); and determining road information of the road based on the lane-level topology connection relationship of the road (S 130). Based on the method, topology structure information of a mutual location between lanes in which a vehicle is located can be identified in real time, and topology structure information of a lane connection can also be identified, to provide guidance for subsequent planning and control of an autonomous driving route of the vehicle and prediction of a driving route of another vehicle. An electronic device, a computer-readable storage medium, and a vehicle are further provided.

## Description

This application claims priority to Chinese Patent Application No. 202111197941.5, filed with the China National Intellectual Property Administration on October 14, 2021 and entitled "ROAD INFORMATION IDENTIFICATION METHOD AND APPARATUS, ELECTRONIC DEVICE, VEHICLE, AND MEDIUM", which is incorporated herein by reference in its entirety.

### TECHNICAL FIELD

This application relates to the field of artificial intelligence technologies, and in particular, to a road information identification method and apparatus, an electronic device, a vehicle, and a medium.

### BACKGROUND

In the autonomous driving technology, a route of a vehicle needs to be planned and controlled based on a topology structure of a road. Therefore, accurately obtaining the topology structure of the road is extremely important for development of the autonomous driving technology.

A current technical solution mainly focuses on obtaining the topology structure of the road by using a high definition map. However, when the topology structure of the road changes, because production of the high definition map is extremely complex, the topology structure is often not updated in a timely manner. In addition, a method for obtaining road information based on the high definition map depends on high-precision positioning information. When the positioning information slightly deviates, a serious accident is caused. In addition, in the conventional technology, most road output focuses on semantic-level output, and does not relate to output of a lane-level topology connection relationship, especially in a lane-free area such as an intersection. In such a lane-free area, even road-lane-level semantic-level output cannot be obtained, and output of a road-lane-level topology connection relationship cannot be obtained. Consequently, output road information cannot be directly used to provide guidance for a driving route for a vehicle, and cannot meet a requirement for autonomous driving.

### SUMMARY

In view of the foregoing problems in the conventional technology, this application provides a road information identification method and apparatus, an electronic device, a vehicle, and a medium, so that topology structure information between lanes on a road on which a vehicle is located can be obtained in real time, and topology structure information of a lane connection on the road on which the vehicle is located can also be obtained, to provide guidance for subsequent planning and control of an autonomous driving route of the vehicle and prediction of a driving route of another vehicle.

To achieve the foregoing objective, a first aspect of this application provides a road information identification method. The method includes: receiving road environment data of a plurality of modalities, where a road environment includes an environment of a lane area and an environment of a lane-free area; performing topology parsing based on the road environment data of the plurality of modalities, to obtain a lane-level topology connection relationship of a road, where the lane-level topology connection relationship of the road indicates a mutual location relationship between lanes on the road and a connection status of the lanes; and determining road information based on the lane-level topology connection relationship of the road.

According to the foregoing description, in the road information identification method provided in the first aspect of this application, road environment data of a plurality of modalities is received, so that data sources of the road environment are more abundant, and a road status can be more comprehensively depicted. In addition, in the technical solution provided in this aspect, topology parsing is performed on the road environment data of the plurality of modalities, so that a lane-level topology connection relationship of a road can be obtained through parsing. The lane-level topology connection relationship is closer to a topology connection relationship of a real road, and a topology of the road is more accurately described. The road information determined based on the lane-level topology of the road in the technical solution of this application may provide guidance for planning and controlling an autonomous driving route of a vehicle and predicting a driving route of another vehicle. In addition, the road environment in this aspect includes an environment of a lane area and an environment of a lane-free area. Therefore, during topology parsing, a lane-level topology connection relationship of the lane-free area can be obtained through parsing, to further orderly guide a driving route of the autonomous vehicle.

In a possible implementation of the first aspect, the lane-level topology connection relationship of the road includes: a topology connection relationship between lanes in the lane area, a topology connection relationship between virtual lanes in the lane-free area, and a topology connection relationship between a lane in the lane area and a virtual lane in the lane-free area.

According to the foregoing description, the topology connection relationship between the lanes in the lane area can be obtained, and the topology connection relationship between the virtual lanes in the lane-free area can also be obtained, and the topology connection relationship between the lane in the lane area and the virtual lane in the lane-free area can further be obtained. In this way, an entire road can form a complete lane-level structure, so that even if the driving route of the autonomous vehicle includes the lane-free area, the driving route of the autonomous vehicle can still be orderly.

In a possible implementation of the first aspect, before the topology connection relationship between the virtual lanes in the lane-free area is obtained, and before the topology connection relationship between the lane in the lane area and the virtual lane in the lane-free area is obtained, the method further includes: determining the virtual lane in the lane-free area based on the multi-modality road environment.

According to the foregoing description, even in the lane-free area, the virtual lane is still provided in this aspect, to guide the driving route of the vehicle, so that orderly driving of the autonomous vehicle can be implemented, thereby improving safety of autonomous driving.

In a possible implementation of the first aspect, the road environment data of the plurality of modalities includes: raw data of the road environment, sensing data of the road environment, and/or prior data of the road environment.

According to the foregoing description, the raw data of the road environment may come from raw data collected by various vehicle-mounted sensors. The sensing data of the road environment may come from a sensing result of a sensing module installed on the vehicle. The prior data of the road environment may come from a standard definition map of the lane. A plurality of pieces of road environment data provided in this application are mutual verification objects, so that accuracy of the road environment data can be improved, and accurate road information can be obtained.

In a possible implementation of the first aspect, the performing topology parsing based on the road environment data of the plurality of modalities, to obtain a lane-level topology connection relationship of a road includes: fusing the road environment data of the plurality of modalities, to obtain fused data; and performing topology parsing on the fused data to obtain the lane-level topology connection relationship of the road.

According to the foregoing description, the road environment data of the plurality of modalities is fused and then topology parsing is performed, so that the lane-level topology connection relationship of the road obtained through parsing is closer to a topology connection relationship of a real road.

In a possible implementation of the first aspect, the determining road information based on the lane-level topology connection relationship of the road includes: performing semantic parsing based on the road environment data of the plurality of modalities, to obtain lane-level semantic information of the road; and combining the lane-level topology connection relationship of the road with the lane-level semantic information of the road, to obtain the road information.

According to the foregoing description, the lane-level semantic information of the road may include a lane edge line, a lane center line, a lane area, an area outside a lane, and the like, and may further include a forward/reverse status in the lane and an association between a related lane and a traffic rule, for example, traffic light information and speed limit information.

In a possible implementation of the first aspect, the road information is obtained by using a road information model, and the road information model is obtained through training based on a neural network.

In a possible implementation of the first aspect, that the road information model is obtained through training based on a neural network includes: obtaining the road environment data and the road information corresponding to the road environment data in a training sample, where the road information is obtained through pre-labeling; and training the road information model by using the road environment data in the training sample as input data for training the road information model, and by using the road information corresponding to the road environment data as expected output data for training the road information model, to obtain the road information model.

According to the foregoing description, a method for obtaining the road information based on the neural network model is provided, and a training method of the model is provided. The model is a pre-trained model and can be modified online. The road information can be determined in real time by using the neural network model, to provide real-time guidance for vehicle driving.

A second aspect of this application provides a road information identification apparatus, including a receiving module, a parsing module, and a determining module. Specifically, the receiving module is configured to receive road environment data of a plurality of modalities, where a road environment includes an environment of a lane area and an environment of a lane-free area. The parsing module is configured to perform topology parsing based on the road environment data of the plurality of modalities, to obtain a lane-level topology connection relationship of a road, where the lane-level topology connection relationship of the road indicates a mutual location relationship between lanes on the road and a connection status of the lanes. The determining module is configured to determine road information of the road based on the lane-level topology connection relationship of the road.

In a possible implementation of the second aspect, the lane-level topology connection relationship of the road in the lane parsing module specifically includes: a topology connection relationship between lanes in the lane area, a topology connection relationship between virtual lanes in the lane-free area, and a topology connection relationship between a lane in the lane area and a virtual lane in the lane-free area.

In a possible implementation of the second aspect, before the topology connection relationship between the virtual lanes in the lane-free area is obtained, and before the topology connection relationship between the lane in the lane area and the virtual lane in the lane-free area is obtained, the apparatus further includes: determining the virtual lane in the lane-free area based on the multi-modality road environment.

In a possible implementation of the second aspect, the road environment data of the plurality of modalities includes: raw data of the road environment, sensing data of the road environment, and/or prior data of the road environment.

In a possible implementation of the second aspect, the parsing module is specifically configured to: fuse the road environment data of the plurality of modalities, to obtain fused data; and perform topology parsing on the fused data to obtain the lane-level topology connection relationship of the road.

In a possible implementation of the second aspect, the lane determining module is specifically configured to: perform semantic parsing based on the road environment data of the plurality of modalities, to obtain lane-level semantic information of the road; and combine the lane-level topology connection relationship of the road with the lane-level semantic information of the road, to obtain the road information.

In a possible implementation of the second aspect, the road information of the road is obtained by using a road information model, and the road information model is obtained through training based on a neural network.

In a possible implementation of the second aspect, that the road information model is obtained through training based on a neural network includes: obtaining the road environment data and a lane structure corresponding to the road environment data in a training sample, where the road information is obtained through pre-labeling; and training the road information model by using the road environment data in the training sample as input data for training the road information model, and by using the road information corresponding to the road environment data as expected output data for training the road information model, to obtain the road information model.

A third aspect of this application provides an electronic device, including a processor and a memory, where the lane memory stores program instructions. When the lane program instructions are executed by the lane processor, the processor is enabled to perform the road information identification method according to the first aspect.

A fourth aspect of this application provides an electronic device, including a processor and an interface circuit. The processor is accessed through the interface circuit, the processor is configured to invoke program instructions stored in a memory, and when the program instructions are executed, the processor is enabled to perform the road information identification method according to the first aspect.

A fifth aspect of this application provides a vehicle, including a vehicle body and the electronic device according to the third aspect or the fourth aspect.

A sixth aspect of this application provides a computer-readable storage medium, where the computer-readable storage medium stores program instructions, and when the lane program instructions are executed by a computer, the computer is enabled to perform the road information identification method according to the first aspect.

These aspects and other aspects of this application are more concise and easy to understand in descriptions of the following (a plurality of) embodiments.

### BRIEF DESCRIPTION OF DRAWINGS

The following further describes the features of this application and the relationship between the features with reference to the drawings. The drawings are all examples, and some features are not shown in actual proportions. In addition, in some drawings, common features that are not mandatory for this application in the field of this application may be omitted. Alternatively, additional features that are not mandatory for this application are shown. A combination of the features shown in the drawings is not intended to limit this application. In addition, in this specification, content referred to by same reference signs is also the same. The specific drawings are described as follows:
FIG. 1 is a schematic diagram of a scenario to which a lane structure identification method is applied according to an embodiment of this application;
FIG. 2 is a flowchart of a road information identification method according to an embodiment of this application;
FIG. 3 is a schematic diagram of a lane structure identification network based on lane data of a plurality of modalities according to an embodiment of this application;
FIG. 4 is a schematic diagram of feature vectors corresponding to data of various modalities according to an embodiment of this application;
FIG. 5 is a schematic diagram of feature vectors included in graph nodes F1 to F7 according to an embodiment of this application;
FIG. 6 is a schematic diagram of data fusion according to an embodiment of this application;
FIG. 7 is a schematic diagram of a scenario of a lane fork according to an embodiment of this application;
FIG. 8 is a schematic diagram of a structure of a road information identification apparatus according to an embodiment of this application;
FIG. 9 is a schematic diagram of a structure of an electronic device according to an embodiment of this application; and
FIG. 10 is a schematic diagram of a structure of another electronic device according to an embodiment of this application.

### DESCRIPTION OF EMBODIMENTS

The words "first, second, third, or the like" or similar terms such as module A, module B, and module C in the specification and claims are only used to distinguish between similar objects, and do not represent a specific order for objects. It can be understood that a specific order or sequence may be exchanged if allowed, so that embodiments of this application described herein can be implemented in an order other than that illustrated or described herein.

In the following descriptions, involved reference numerals such as S110 and S120 that indicate steps do not necessarily indicate that the steps are to be performed based on the order, and consecutive steps may be transposed if allowed, or may be performed simultaneously.

The term "include" as used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "device including apparatuses A and B" should not be limited to device consisting of only components A and B.

"One embodiment" or "an embodiment" mentioned in this specification means that a specific feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any suitable manner, as will be apparent to those of ordinary skill in the art from the present disclosure.

Unless otherwise defined, all technical and scientific terms used in this specification have same meanings as those usually understood by a person skilled in the art of this application. In case of any inconsistency, the meaning described in this specification or the meaning obtained based on the content recorded in this specification shall be used. In addition, the terms used in this specification are merely for the purpose of describing embodiments of this application, but are not intended to limit this application.

The following describes embodiments of this application in detail with reference to the accompanying drawings. First, a scenario to which a road information identification method provided in embodiments of this application is applied is described.

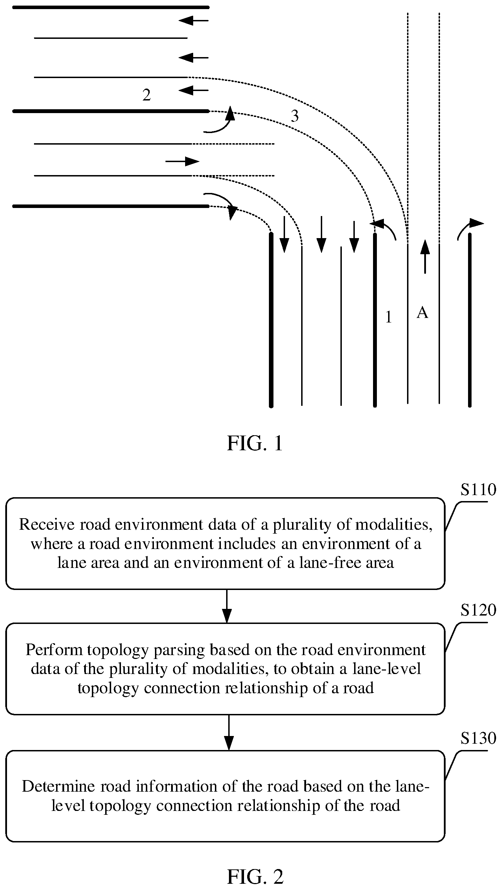

The road information identification method provided in embodiments of this application may be applied to an autonomous vehicle (autonomous vehicle, AV). When embodiments of this application are applied to a vehicle, the vehicle may include a data collection device and a processor. The data collection device is configured to obtain road environment data. For example, the data collection device may be a sensor configured to collect various types of road environment data, such as a lidar or a camera. The data collection device may alternatively be an electronic device configured to receive road environment data, such as a data transmission chip. The data transmission chip is a bus data transceiver chip or a network interface chip. The data transmission chip may alternatively be a wireless transmission chip, such as a Bluetooth chip or a Wi-Fi chip. In some other embodiments, the data collection device may alternatively be integrated into the processor, and serve as an interface circuit, a data transmission module, or the like that is integrated into the processor. The processor may receive the road environment data in real time, perform fusion and topology parsing on the road environment data to obtain a lane-level topology connection relationship of a road, and then determine, based on the lane-level topology connection relationship of the road, road information shown in FIG. 1. When embodiments of this application are applied to a vehicle, the processor may be an electronic device, for example, may be a processor of a vehicle-mounted processing apparatus such as a head unit, a domain controller, a mobile data center (mobile data center, MDC), or a vehicle-mounted computer, or may be a conventional chip such as a central processing unit (central processing unit, CPU) or a microprocessor (micro control unit, MCU). The road information is obtained in real time by using a road information identification method provided in this application, to provide an auxiliary function for planning and controlling an autonomous driving route of the vehicle.

FIG. 1 shows a specific scenario to which the road information identification method provided in an embodiment of this application is applied. In this scenario, an intersection area (a hybrid road section with a real lane area and an area without a real lane) is used as an example. A vehicle A receives road environment data in real time, performs topology parsing on the road environment data, to obtain a lane-level topology connection relationship of a road, and then determines, based on the lane-level topology connection relationship of the road, a road structure shown in FIG. 1.

The road information includes a real lane line (a solid line part in FIG. 1) of the road, a virtual lane line (a dashed line part in FIG. 1) of the road, an association relationship (not shown in the figure) between a traffic light at an intersection and the lane, and the like. Based on the road information, driving of the autonomous vehicle may be orderly guided, to ensure driving safety of the vehicle.

In this embodiment of this application, the real lane area may be considered as an area in which a real lane line exists, and the area without a real lane may be considered as an area in which no real lane line exists (the area is usually an intersection, a vehicle fork, a vehicle flow gathering position, or the like). Generally, in the real lane area, a vehicle usually travels along the real lane line. In the area without a real lane, a vehicle may usually travel at random on a premise that a traffic rule of a corresponding area is met. Based on the technical solutions provided in embodiments of this application, the real lane lines of the real lane area can be obtained, and a virtual lane line of the area without a real lane can also be obtained. The virtual lane line is connected to a corresponding real lane line, to obtain a complete road connection structure. For example, a real lane 1 and a real lane 2 shown in FIG. 1 are connected by using a virtual lane 3, and a route for the vehicle to enter the lane 2 from the lane 1 is planned. This implements orderly driving of the autonomous vehicle.

It should be understood that the road information includes a plurality of lanes and a driving rule of a corresponding lane. The lane-level topology connection relationship of the road in this embodiment of this application includes a connection of each lane on the road and a driving rule corresponding to each lane. The driving rule includes an association rule between a traffic light and the lane, a speed limit, and the like.

In an example of this application, a semantic map of a road may be determined based on collected road image data, and then structure information of the road is determined based on the semantic map. The structure information of the road includes lane group information. However, in this case, the lane group information is obtained. The grouping information is based on a group of a lane in which the vehicle is currently located, and does not provide a connection relationship between front and rear lanes. Therefore, when an opinion is provided for a driving track of the vehicle, an opinion delay usually occurs, or even a planned route is inaccurate.

In an example of this application, a laser point cloud of an environment around the vehicle may be encoded and then projected to an image plane photographed by a vehicle camera, and then road segmentation of a two-dimensional image is completed in a deep learning manner. However, in this case, road segmentation is only semantic-level segmentation, and there is no output of a related road topology structure attribute. Therefore, road information cannot be fully depicted, and a requirement of autonomous vehicle route planning cannot be met.

Refer to the figures. The following describes in detail a road information identification method provided in embodiments of this application.

FIG. 2 is a flowchart of a road information identification method according to an embodiment of this application. An implementation process of the method mainly includes steps S 110 to S130. The following sequentially describes the steps.

S110: Receive road environment data of a plurality of modalities. A road environment includes an environment of a lane area and an environment of a lane-free area.

In this embodiment, road environment data of a modality may be raw data of a lane on a road, and the raw data of the road may be collected by using various sensors installed on a vehicle, that is, may be raw data collected by the sensors. For example, the sensor may be a lidar, and the collected raw data of the lane is laser point data. For another example, the sensor may be a camera, and the collected raw data of the lane on the road is image data. For another example, the sensor may alternatively be an ultrasonic sensor, and the collected raw data of the lane on the road is ultrasonic data.

In this embodiment, road environment data of another modality may be sensing data of a lane on the road. The sensing data of the road may be obtained by using various sensing modules installed on the vehicle. In other words, a sensing result of the sensing module is the sensing data. For example, when the sensing data is a detection result of a lane line, the sensing result of the sensing module is a lane line result obtained by parsing laser data or image data. For another example, when the sensing data is a vehicle positioning result, the sensing result of the sensing module is vehicle positioning information obtained by using a positioning module. For another example, when the sensing data is a detection result of a surrounding environmental obstacle, the sensing result of the sensing module is a detection result of the surrounding obstacle (for example, a vehicle or a pedestrian) obtained by parsing laser data, image data, or the like.

In this embodiment, road environment data of another modality may be prior data of a lane in the road environment. The prior data of the road is from a standard definition map (standard definition map, SD map), which may also be referred to as a navigation map. The standard definition map is an electronic map with low precision (generally about 10 meters) and few data dimensions (generally, only dimensions such as a shape, a slope, a curvature, and a direction of a road are recorded). Generally, a user of the standard definition map is a driver. The standard definition map is different from a high definition map (high definition map, HD map). In short, the high definition map is an electronic map with higher precision and more data dimensions. The precision of the high definition map generally needs to reach 20 cm. Dimensions of the high definition map include dimensions of the standard definition map, and also need to include data related to lane attributes, such as a lane line type and a lane width. A user of the high definition map is generally an autonomous vehicle.

The raw data, the sensing data, and the prior data of the road environment may be used for mutual verification, to improve robustness.

It should be understood that the foregoing listed road environment data of the three modalities is merely an example for description. In another embodiment, road environment data of another modality may be further included. This is not limited in this embodiment of this application. In addition, a means of obtaining road environment data of various modalities is not limited in this embodiment of this application. The foregoing description provides only some possible implementations.

S120: Fuse the road environment data of the plurality of modalities, to obtain fused data.

A probability theory statistics method, for example, a weighted average method or a Bayesian estimation method, may be used to fuse the road environment data of the plurality of modalities. A logical reasoning method, for example, fuzzy reasoning, may alternatively be used to fuse the road environment data of the plurality of modalities. A search-based fusion algorithm, for example, a genetic algorithm (genetic algorithm, GA) or a particle swarm optimization (particle swarm optimization, PSO) algorithm, may alternatively be used to fuse the road environment data of the plurality of modalities. A neural network method, for example, a graph neural network, may alternatively be used to fuse the road environment data of the plurality of modalities. In this embodiment of this application, the graph neural network is used as an example to describe fusion of the road environment data of the plurality of modalities. For a specific fusion process, refer to descriptions of a part in which feature fusion is implemented in a form of a graph neural network in the following embodiments.

S120: Perform topology parsing based on the road environment data of the plurality of modalities, to obtain a lane-level topology connection relationship of the road. The lane-level topology connection relationship of the road indicates a mutual location relationship between lanes on the road and a connection status of the lanes

In this embodiment, the lane-level topology connection relationship of the road includes a topology connection relationship between real lanes in the lane area, a topology connection relationship between virtual lanes in the lane-free area, and a topology connection relationship between a lane in the lane area and a virtual lane in the lane-free area. A typical representative of the lane-free area is an intersection area, a vehicle flow fork area, a vehicle flow gathering area, or the like. The topology connection relationship in this embodiment may provide the virtual lane in the lane-free area and a connection topology of the virtual lane, so that the autonomous vehicle uses the topology connection relationship to perform route planning.

It should be understood that before the topology connection relationship between the virtual lanes in the lane-free area is provided, the virtual lanes in the lane-free area need to be determined first. In an optional implementation, the virtual lane in the lane-free area may be obtained based on a neural network. Optionally, the neural network may be one or more of a convolutional neural network, a BP neural network, or a deep neural network, or may be another neural network. This is not limited in this embodiment of this application.

Similarly, before the topology connection relationship between the lane in the lane area and the virtual lane in the lane-free area is provided, the virtual lane in the lane-free area also needs to be first determined. Herein, the virtual lane in the lane-free area may also be obtained based on a neural network. Similarly, the neural network herein may also be one or more of a convolutional neural network, a BP neural network, or a deep neural network, or may be another neural network. This is not limited in this embodiment of this application.

In an optional implementation, the road environment data of the plurality of modalities is first fused, and then topology parsing is performed on the fused data, to obtain the lane-level topology connection relationship of the road.

A probability theory statistics method, for example, a weighted average method or a Bayesian estimation method, may be used to fuse the road environment data of the plurality of modalities. A logical reasoning method, for example, fuzzy reasoning, may alternatively be used to fuse the road environment data of the plurality of modalities. A search-based fusion algorithm, for example, a genetic algorithm (genetic algorithm, GA) or a particle swarm optimization (particle swarm optimization, PSO) algorithm, may alternatively be used to fuse the road environment data of the plurality of modalities. A neural network method, for example, a graph neural network, may alternatively be used to fuse the road environment data of the plurality of modalities. In this embodiment of this application, the graph neural network is used as an example to describe fusion of the road environment data of the plurality of modalities. For a specific fusion process, refer to descriptions of a part in which feature fusion is implemented in a form of a graph neural network in the following embodiments.

In an optional implementation, the virtual lane in the lane-free area in a training sample may be obtained by labeling the training sample in advance. In this embodiment, the training sample herein may be generally labeled in a manual labeling manner.

It should be understood that, if road environment data is of one modality, the lane-level topology connection relationship of the road may be obtained by directly performing topology parsing on the road environment data. In this case, a data fusion step does not need to be performed.

In this embodiment, topology parsing may be performed on the road environment data based on a road information model. The road information model is obtained through training based on the neural network. Optionally, the road information model in this embodiment may be pre-trained and/or trained online. That is, the road information model may be obtained through offline training, or may be obtained through online training, or may be obtained through a combination of offline training and online training.

S130: Determine road information of the road based on the lane-level topology connection relationship of the road.

In this step, semantic parsing is first performed based on the road environment data of the plurality of modalities, to obtain lane-level semantic information of the road. Then, the lane-level topology connection relationship of the road is combined with the lane-level semantic information of the road, to obtain the road information of the road.

In this step, semantic parsing may be performed on the road environment data based on the road information model. Optionally, the road information model is obtained through training based on the neural network.

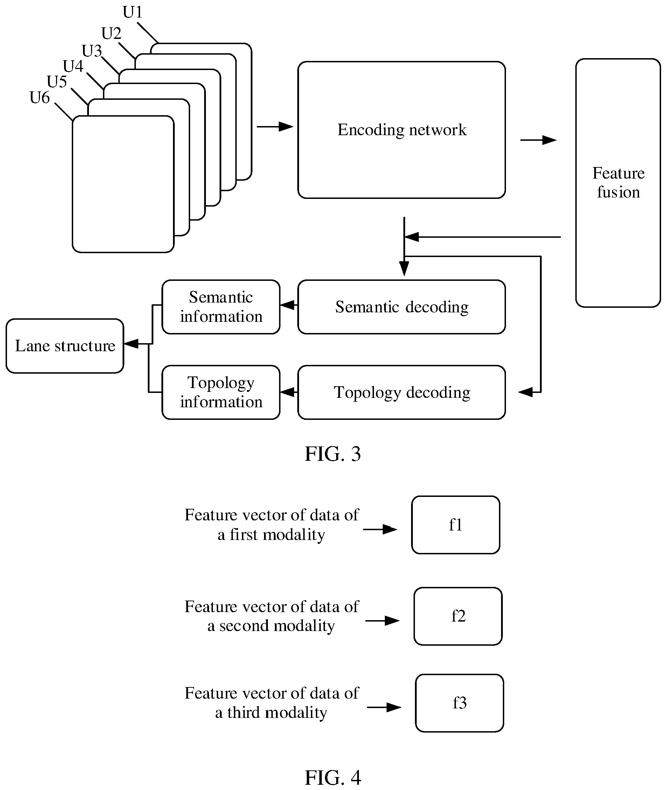

FIG. 3 is a schematic diagram of a road information identification network (that is, a schematic diagram of a network structure of a road information model) based on lane data of a plurality of modalities according to an embodiment of this application. The following describes in detail a specific implementation of road information identification in this embodiment based on the identification network.

First, the road environment data of the plurality of modalities is used as input data of the network.

In this embodiment, the road environment data includes raw data of the road environment, for example, lidar data U1 and image data U2 shown in FIG. 3. The road environment data further includes sensing data of the road environment, for example, a lane line U3 and a segmentation image U4 shown in FIG. 3. The road environment data further includes prior data of the road environment, for example, a lane shape U5 and a lane direction U6 shown in FIG. 3. The data of the foregoing three modalities is separately input into respective corresponding encoding networks for feature extraction. For example, the encoding network may be a neural network. It should be understood that, in this embodiment, input of each modality corresponds to a different encoding network. This is not limited in this embodiment of this application.

Then, feature fusion is performed on an output result of the encoding network. In an optional implementation, feature fusion may be implemented in a form of a graph neural network. The graph neural network needs to obtain a graph node and an initial value of an edge matrix.

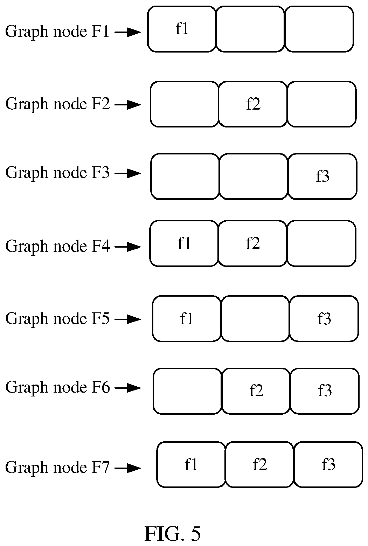

The following first describes a process of obtaining the graph node in the graph neural network. Specifically, data of each modality extracted from the encoding network is encoded as a feature vector. For example, as shown in FIG. 4, data of a first modality (raw data of the road environment) is encoded as a feature vector f1, data of a second modality (sensing data of the road environment) is encoded as a feature vector f2, and data of a third modality (prior data of the road environment) is encoded as a feature vector f3. Then, a combination operation is performed on the feature vectors to generate the graph node. In this embodiment, a combination operation is performed on the feature vector f1, the feature vector f2, and the feature vector f3, to obtain seven graph nodes F1 to F7. When a feature vector of a specific modality is missing in a combination, the feature vector may be supplemented by using an empty feature vector. FIG. 5 is a schematic diagram of feature vectors included in the graph nodes F1 to F7. According to the foregoing principle, it may be learned that feature vectors included in the graph node F1 are the feature vector f1 and two empty feature vectors. Feature vectors included in the graph node F2 are the feature vector f2 and two empty feature vectors. Feature vectors included in the graph node F3 are the feature vector f3 and two empty feature vectors. Feature vectors included in the graph node F4 are the feature vector f1, the feature vector f2, and one empty feature vector. Feature vectors included in the graph node F5 are the feature vector f1, one empty feature vector, and the feature vector f3. Feature vectors included in the graph node F6 are one empty feature vector, the feature vector f2, and the feature vector f3. Feature vectors included in the graph node F7 are the feature vector f1, the feature vector f2, and the feature vector f3.

The following describes a process of obtaining the initial value of the edge matrix in the graph neural network. The initial value of the edge matrix in this embodiment may be set based on a ratio of a quantity of intersection sets of modalities included in a related graph node to a quantity of union sets of the modalities included in the related graph node. The following table shows initial values of edge matrices between the foregoing seven graph nodes F1 to F7.

**Table 1**

| | Graph node F1 | Graph node F2 | Graph node F3 | Graph node F4 | Graph node F5 | Graph node F6 | Graph node F7 |
|---|---|---|---|---|---|---|---|
| Graph node F1 | 1 | 0 | 0 | 0.5 | 0.5 | 0 | 0.33 |
| Graph node F2 | 0 | 1 | 0 | 0.5 | 0 | 0.5 | 0.33 |
| Graph node F3 | 0 | 0 | 1 | 0 | 0.5 | 0.5 | 0.33 |
| Graph node F4 | 0.5 | 0.5 | 0 | 1 | 0.5 | 0.5 | 0.67 |
| Graph node F5 | 0.5 | 0 | 0.5 | 0.5 | 1 | 0.5 | 0.67 |
| Graph node F6 | 0 | 0.5 | 0.55 | 0.5 | 0.5 | 1 | 0.67 |
| Graph node F7 | 0.33 | 0.33 | 0.33 | 0.67 | 0.67 | 0.67 | 1 |

Specifically, for example, the feature vectors included in the graph node F2 are the feature vector f2 and the two empty feature vectors, and the feature vectors included in the graph node F4 are the feature vector f1, the feature vector f2, and the empty feature vector. Therefore, an intersection set of the modalities included in the two graph nodes is the feature vector f2, a quantity of intersection sets is 1, and a union set of the modalities included in the two graph nodes is the feature vector f1 and the feature vector f2. Therefore, the initial value of the edge matrix corresponding to the graph node F2 and the graph node F4 is 1/2=0.5. For another example, the feature vectors included in the graph node F6 are the empty feature vector, the feature vector f2, and the feature vector f3, and the feature vectors included in the graph node F7 are the feature vector f1, the feature vector f2, and the feature vector f3. Therefore, an intersection set of the modalities included in the two graph nodes is the feature vector f2 and the feature vector f3, a quantity of intersection sets is 2, and a union set of the modalities included in the two graph nodes is the feature vector f1, the feature vector f2, and the feature vector f3. Therefore, the initial value of the edge matrix corresponding to the graph node F6 and the graph node F7 is 2/3≈0.67. A process of calculating an initial value of an edge matrix of another graph node is similar, and details are not described herein again.

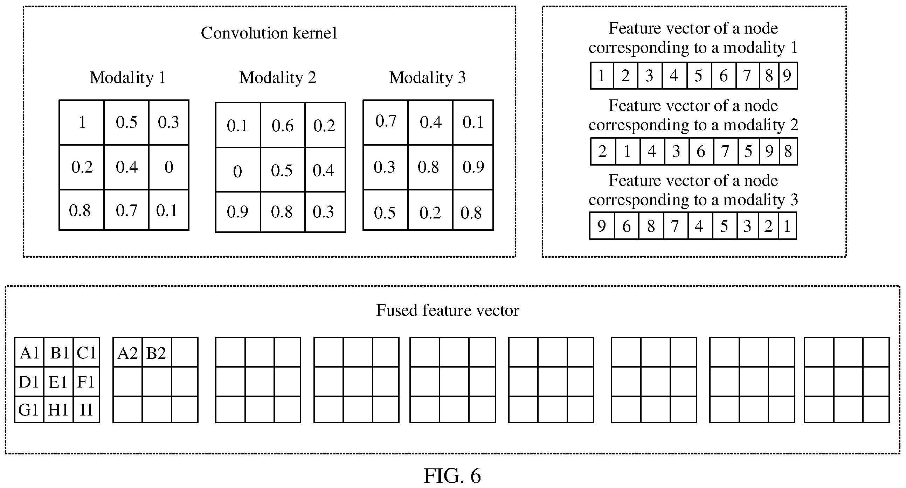

Next, graph nodes (the graph node F1, the graph node F2, and the graph node F3) that include only data of one modality and that are obtained by using the graph neural network are used as features, and a convolution operation is performed on the features by using a convolution kernel, to obtain fused data. As shown in FIG. 6, a convolution kernel (3*3*1) corresponding to the three modalities shown in FIG. 4 (a dashed box on the left side of FIG. 6) is provided, and a feature vector (1*9) (a dashed box on the right side of FIG. 6) of a node corresponding to the data of three modalities processed by the graph neural network is provided. Correspondingly, a fused feature vector is (3*3*9) (a dashed box on the lower side of FIG. 6). In an optional implementation, the convolution kernel may be obtained by encoding data of each modality extracted from the encoding network into a matrix, and a value in the matrix represents sensitivity of the modality at a pixel. It should be understood that, values in the matrices shown in FIG. 6 are merely example values, and may be randomly set based on an actual situation.

For example, a process of calculating a value of A1 in FIG. 6 is A1=1*1+2*0.1+9*0.7=7.5, that is, a product of a first value (1) in a feature vector of a node corresponding to data of a first modality and a value (1) corresponding to a first row and a first column in a convolution kernel corresponding to the data of the first modality+a first value (2) in a feature vector of a node corresponding to data of a second modality and a value (0.1) corresponding to a first row and a first column in a convolution kernel corresponding to the data of the second modality+a product of a first value (9) in a feature vector of a node corresponding to data of a third modality and a value (0.7) corresponding to a first row and a first column in a convolution kernel corresponding to the data of the third modality. A process of calculating a value of B1 in FIG. 6 is B1=1*0.5+2*0.6+9*0.4=5.3, that is, a product of a first value (1) in a feature vector of a node corresponding to data of a first modality and a value (0.5) corresponding to a first row and a second column in a convolution kernel corresponding to the data of the first modality+a first value (2) in a feature vector of a node corresponding to data of a second modality and a value (0.6) corresponding to a first row and a second column in a convolution kernel corresponding to the data of the second modality+a product of a first value (9) in a feature vector of a node corresponding to data of a third modality and a value (0.4) corresponding to a first row and a second column in a convolution kernel corresponding to the data of the third modality. A process of calculating a value of A2 in FIG. 6 is A2=2*1+1*0.1+6*0.7=6.3, that is, a product of a second value (2) in a feature vector of a node corresponding to data of a first modality and a value (1) corresponding to a first row and a first column in a convolution kernel corresponding to the data of the first modality+a second value (1) in a feature vector of a node corresponding to data of a second modality and a value (0.1) corresponding to a first row and a first column in a convolution kernel corresponding to the data of the second modality+a product of a second value (6) in a feature vector of a node corresponding to data of a third modality and a value (0.7) corresponding to a first row and a first column in a convolution kernel corresponding to the data of the third modality. A process of calculating a value of B2 in FIG. 6 is B2=2*0.5+1*0.6+6*0.4=4, that is, a product of a second value (2) in a feature vector of a node corresponding to data of a first modality and a value (0.5) corresponding to a first row and a second column in a convolution kernel corresponding to the data of the first modality+a second value (1) in a feature vector of a node corresponding to data of a second modality and a value (0.6) corresponding to a first row and a second column in a convolution kernel corresponding to the data of the second modality+a product of a second value (6) in a feature vector of a node corresponding to data of a third modality and a value (0.4) corresponding to a first row and a second column in a convolution kernel corresponding to the data of the third modality. In addition, a calculation process of other positions of the other channels is the same as that of A1 and B1 shown in a first channel and A2 and B2 shown in a second channel, and only a convolution operation needs to be performed on a corresponding position. Details are not described herein again.

After feature fusion is completed, the fused data needs to be parsed. The identification network in this embodiment includes two parts: topology parsing and semantic parsing.

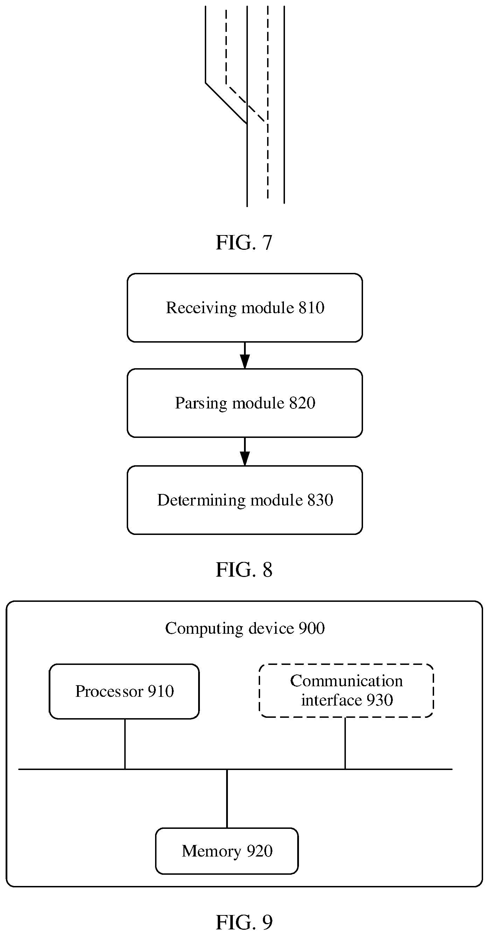

FIG. 7 is a schematic diagram of a scenario of a lane fork. A solid line part represents a lane boundary line, and a dashed line part represents a lane center line. In this embodiment, a correspondence between semantic information of a lane and a semantic classification number is first defined. For example, a semantic classification number of a lane boundary line is defined as 2, a semantic classification number of a lane center line is defined as 1, and a semantic classification number of another area is defined as 0, as shown in Table 2.

**Table 2**

| Semantic information | Semantic classification number |
|---|---|
| Lane boundary line (Lane Boundary) | 2 |
| Lane center line (Lane Center) | 1 |
| Another area (Empty) | 0 |

Semantic parsing is performed on the scenario shown in FIG. 7, to obtain a lane semantic correspondence table shown in Table 3.

**Table 3**

| Index number | 0 | 1 | 2 | 3 | 4 | 5 | 6 |
|---|---|---|---|---|---|---|---|
| Semantic classification number | 0 | 2 | 0 | 1 | 0 | 2 | 0 |

Topology parsing is performed on the scenario shown in FIG. 7, to obtain a topology connection relationship of a lane in a top view of the scenario shown in Table 4. A number stored at each position in Table 4 represents an index number in a lane semantic correspondence table (Table 3) corresponding to the number. It should be understood that the index number may be understood as an intermediate quantity, and is used to establish a correspondence between a lane semantic and a lane topology. To be specific, semantics corresponding to the lane topology and each location in the actual lane area may be obtained by using the index number.

**Table 4**

| | | | | | | | | | | |
|---|---|---|---|---|---|---|---|---|---|---|
| 1 | 0 | 3 | 0 | 1 | 2 | 3 | 4 | 5 | 6 | 6 |
| 1 | 0 | 3 | 0 | 1 | 2 | 3 | 4 | 5 | 6 | 6 |
| 1 | 0 | 3 | 0 | 1 | 2 | 3 | 4 | 5 | 6 | 6 |
| 0 | 1 | 0 | 3 | 1 | 2 | 3 | 4 | 5 | 6 | 6 |
| 0 | 0 | 1 | 0 | 1 | 2 | 3 | 4 | 5 | 6 | 6 |
| 0 | 0 | 0 | 1 | 1 | 3 | 3 | 4 | 5 | 6 | 6 |
| 0 | 0 | 0 | 0 | 1 | 2 | 3 | 4 | 5 | 6 | 6 |
| 0 | 0 | 0 | 0 | 1 | 2 | 3 | 4 | 5 | 6 | 6 |
| 0 | 0 | 0 | 0 | 1 | 2 | 3 | 4 | 5 | 6 | 6 |
| 0 | 0 | 0 | 0 | 1 | 2 | 3 | 4 | 5 | 6 | 6 |
| 0 | 0 | 0 | 0 | 1 | 2 | 3 | 4 | 5 | 6 | 6 |

After semantic parsing and topology parsing are completed, semantic parsing and topology parsing are combined, that is, the index numbers at the positions in Table 4 are used to search Table 3 for correspondence, to obtain corresponding road information. For example, in Table 4, a semantic classification number corresponding to a position whose index number is 0, 2, 4, and 6 is 0, indicating another area. In Table 4, a semantic classification number corresponding to a position whose index number is 1 and 5 is 2, indicating a lane boundary line. In Table 4, a semantic classification number corresponding to a position whose index number is 3 is 1, indicating a lane center line. Table 5A shows a topology information relationship of lane boundary lines, Table 5B shows a topology information relationship of lane center lines, and Table 5C shows road information obtained by combining information in Table 5A and Table 5B.

**Table 5A**

| | | | | | | | | | | |
|---|---|---|---|---|---|---|---|---|---|---|
| 2 | | | | 2 | | | | 2 | | |
| 2 | | | | 2 | | | | 2 | | |
| 2 | | | | 2 | | | | 2 | | |
| | 2 | | | 2 | | | | 2 | | |
| | | 2 | | 2 | | | | 2 | | |
| | | | 2 | 2 | | | | 2 | | |
| | | | | 2 | | | | 2 | | |
| | | | | 2 | | | | 2 | | |
| | | | | 2 | | | | 2 | | |
| | | | | 2 | | | | 2 | | |
| | | | | 2 | | | | 2 | | |

**Table 5B**

| | | | | | | | | | | |
|---|---|---|---|---|---|---|---|---|---|---|
| | | 1 | | | | 1 | | | | |
| | | 1 | | | | 1 | | | | |
| | | 1 | | | | 1 | | | | |
| | | | 1 | | | 1 | | | | |
| | | | | | | 1 | | | | |
| | | | | | 1 | 1 | | | | |
| | | | | | | 1 | | | | |
| | | | | | | 1 | | | | |
| | | | | | | 1 | | | | |
| | | | | | | 1 | | | | |
| | | | | | | 1 | | | | |

**Table 5C**

| | | | | | | | | | | |
|---|---|---|---|---|---|---|---|---|---|---|
| 2 | | 1 | | 2 | | 1 | | 2 | | |
| 2 | | 1 | | 2 | | 1 | | 2 | | |
| 2 | | 1 | | 2 | | 1 | | 2 | | |
| | 2 | | 1 | 2 | | 1 | | 2 | | |
| | | 2 | | 2 | | 1 | | 2 | | |
| | | | 2 | 2 | 1 | 1 | | 2 | | |
| | | | | 2 | | 1 | | 2 | | |
| | | | | 2 | | 1 | | 2 | | |
| | | | | 2 | | 1 | | 2 | | |
| | | | | 2 | | 1 | | 2 | | |
| | | | | 2 | | 1 | | 2 | | |

It should be understood that the foregoing semantic information is merely an example for description. In another embodiment, other semantics may be further included, for example, a red light and a green light identifier and a lane identifier (for example, a speed limit sign).

Based on the road information identification method provided in this embodiment of this application, a lane-level topology and corresponding semantic information of a road can be output. This can greatly facilitates autonomous driving planning control and prediction, and implements output of a virtual lane in a lane-free area, such as an intersection area, a lane fork area, or a lane confluence area, to better support a high-level autonomous driving function.

Another embodiment of this application provides a training process of the road information model. The training process includes a data labeling process and a training process. The data labeling process is labeling data in a training sample, so that a group of road environment data corresponds to specific road information of the group of road environment data.

After sample labeling is completed, the road environment data in the training sample is used as input data for training the road information model, the corresponding road information is used as expected output data for training the road information model, and the road information model is obtained by continuously adjusting a model parameter.

In an optional implementation, the training sample may be divided into a plurality of training subsamples based on different road scenarios to train the road information model. For example, the training sample is divided into a training subsample in an intersection area, a training subsample in a branch road area, and a training subsample in a flow combination area. For each training subsample, a road information submodel corresponding to the training subsample is trained, and then road information submodels are associated, to obtain a final road information model. In another optional implementation, the training sample may be directly trained, to directly obtain a finally required road information model.

In the foregoing model training process, because it is expected that output of the model is as close as possible to a real scenario (that is, a labeling result), a difference between output of the current model and the labeling result may be obtained by using a loss function or an objective function, and then weight vectors of layers of the model network are adjusted and updated based on the difference between the output of the current model and the labeling result. By continuously adjusting the weight vectors of the layers, when a probability that the output result of the model is a labeling result meets a requirement, training of the model ends. A loss function is used as an example. A higher output value (loss) of the loss function indicates a larger difference between the output of the model and the labeling result. In this case, a training process of the model becomes a process of reducing a loss as much as possible.

Another embodiment of this application provides a road information identification apparatus. The apparatus may be implemented by a software system, or may be implemented by a hardware device, or may be implemented by a combination of a software system and a hardware device.

It should be understood that FIG. 8 is merely an example of a schematic diagram of a structure of a road information identification apparatus. Division of function modules in the lane structure identification apparatus is not limited in this application. As shown in FIG. 8, the road information identification apparatus may be logically divided into a plurality of modules, each module may have a different function, and a function of each module may be implemented by a processor in an electronic device by reading and executing instructions in a memory. For example, the road information identification apparatus includes a receiving module 810, a parsing module 820, and a determining module 830.

In an optional implementation, the lane structure identification apparatus is configured to perform content described in steps S110 to S130 shown in FIG. 2. Specifically, the receiving module 810 may be configured to receive road environment data of a plurality of modalities, where a road environment includes an environment of a lane area and an environment of a lane-free area. The parsing module 820 is configured to perform topology parsing based on the road environment data of the plurality of modalities, to obtain a lane-level topology connection relationship of a road, where the lane-level topology connection relationship of the road indicates a mutual location relationship between lanes on the road and a connection status of the lanes. The determining module 830 is configured to determine road information of the road based on the lane-level topology connection relationship of the road.

In this embodiment, the lane-level topology connection relationship of the road in the parsing module 820 specifically includes: a topology connection relationship between lanes in the lane area, a topology connection relationship between virtual lanes in the lane-free area, and a topology connection relationship between a lane in the lane area and a virtual lane in the lane-free area.

In this embodiment, before the obtaining a topology connection relationship between virtual lanes in the lane-free area, the method further includes: determining the virtual lane in the lane-free area based on the multi-modality road environment.

In addition, before the obtaining a topology connection relationship between a lane in the lane area and a virtual lane in the lane-free area, the method further includes: determining the virtual lane in the lane-free area based on the multi-modality road environment.

In this embodiment, the road environment data of the plurality of modalities includes: raw data of the road environment, sensing data of the road environment, and/or prior data of the road environment. For a specific manner of obtaining the road environment data of the plurality of modalities, refer to the detailed description in the foregoing embodiment. Details are not described in this embodiment again.

In this embodiment, the parsing module 820 is configured to: fuse the road environment data of the plurality of modalities, to obtain fused data; and perform topology parsing on the fused data to obtain the lane-level topology connection relationship of the road. For a specific topology parsing process, refer to the detailed description in the foregoing embodiment. Details are not described in this embodiment again.

Specifically, the determining module 830 is specifically configured to: perform semantic parsing based on the road environment data of the plurality of modalities, to obtain semantic information of the lane; and combine the topology connection relationship of the lane with the semantic information of the lane, to obtain the lane-level road information of the road. For a specific semantic parsing process, refer to the detailed description in the foregoing embodiment. Details are not described in this embodiment again.

In an optional implementation, the road information is obtained by using a road information model, and the road information model is obtained through training based on a neural network. For a specific training process of the road information model, refer to the description of training the road information model in the foregoing embodiment. Details are not described in this embodiment again.

It should be noted that, for a specific implementation of each function module in this embodiment, refer to the description in the foregoing method embodiment. Details are not described in this embodiment again.

An embodiment of this application further provides an electronic device, including a processor and a memory. The memory stores program instructions, and when the program instructions are executed by the processor, the processor is enabled to perform the method in the embodiment corresponding to FIG. 2 or the optional embodiments thereof.

FIG. 9 is a schematic diagram of a structure of an electronic device 900 according to an embodiment of this application. The electronic device 900 includes a processor 910 and a memory 920.

It should be understood that the electronic device 900 shown in FIG. 9 may further include a communication interface 930, which may be configured to communicate with another device.

The processor 910 may be connected to the memory 920. The memory 920 may be configured to store program code and data. Therefore, the memory 920 may be a storage unit in the processor 910, an external storage unit independent of the processor 910, or a component including the storage unit in the processor 910 and the external storage unit independent of the processor 910.

Optionally, the electronic device 900 may further include a bus. The memory 920 and the communication interface 930 may be connected to the processor 910 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that, in this embodiment of this application, the processor 910 may be a central processing unit (central processing unit, CPU). The processor may also be another general-purpose processor, a digital signal processor (digital signal processor, DSP), an application specific integrated circuit (application specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like. Alternatively, the processor 910 uses one or more integrated circuits, and is configured to execute a related program, to implement the technical solutions provided in embodiments of this application.

The memory 920 may include a read-only memory and a random access memory, and provides instructions and data to the processor 910. A part of the processor 910 may further include a non-volatile random access memory. For example, the processor 910 may further store device type information.

When the electronic device 900 runs, the processor 910 executes computer-executable instructions in the memory 920 to perform the operation steps of the foregoing method.

It should be understood that the electronic device 900 according to this embodiment of this application may be corresponding to a corresponding body in the method according to embodiments of this application, and the foregoing and other operations and/or functions of the modules in the electronic device 900 are separately used to implement corresponding procedures of the methods in the embodiments. For brevity, details are not described herein again.

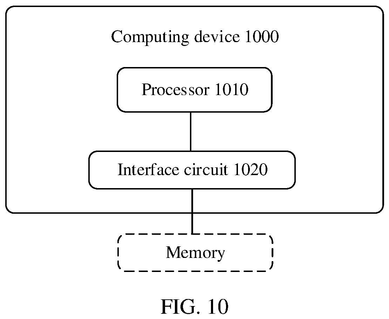

An embodiment of this application further provides another electronic device. FIG. 10 is a schematic diagram of a structure of another electronic device 1000 according to this embodiment. The electronic device 1000 includes a processor 1010 and an interface circuit 1020. The processor 1010 accesses a memory through the interface circuit 1020, the memory stores program instructions, and when the program instructions are executed by the processor, the processor is enabled to perform the method in the embodiment corresponding to FIG. 2. In addition, the electronic device may further include a communication interface, a bus, and the like. For details, refer to the description in the embodiment shown in FIG. 9. Details are not described again. For example, the interface circuit 1020 may be a CAN bus or an LIN bus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, some of the technical solutions may be implemented in the form of a software product. The computer software product is stored in a storage medium and includes several instructions for instructing a computing device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the program is executed by a processor, the program is used to perform a road information identification method. The method includes at least one of the solutions described in the foregoing embodiments.

The computer storage medium in embodiments of this application may use any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or component, or any combination thereof. A more specific example (non-exhaustive list) of the computer-readable storage medium includes: an electrically connected or portable computer disk with one or more wires, a hard disk, a random access memory (RAM), a read-only memory (ROM), an erasable programmable read-only memory (EPROM or flash), an optical fiber, a portable compact disc read-only memory (CD-ROM), an optical storage device, a magnetic storage device, or any suitable combination thereof. In this document, the computer-readable storage medium may be any tangible medium that includes or stores a program, and the program may be used by or in combination with an instruction execution system, apparatus, or component.

A computer-readable signal medium may be included in a baseband or may be used as a data signal propagated as a part of a carrier, and carries computer-readable program code. The data signal propagated in this manner may be in a plurality of forms, including but not limited to an electromagnetic signal, an optical signal, or any suitable combination thereof. The computer-readable signal medium may be any computer-readable medium other than the computer-readable storage medium, and the computer-readable medium may send, propagate, or transmit a program used by or in combination with an instruction execution system, apparatus, or component.

Program code included in the computer-readable medium may be transmitted by using any proper medium, including but not limited to wireless, electric wire, an optical cable, RF, or any proper combination thereof.

Computer program code for performing the operations in this application may be written in one or more programming languages or a combination thereof. The programming languages include object-oriented programming languages such as Java, Smalltalk, and C++, and further includes conventional process programming languages such as the "C" language or similar programming languages. The program code may be completely executed on a user computer, partially executed on a user computer, executed as an independent software package, partially executed on a user computer and partially executed on a remote computer, or completely executed on a remote computer or server. In a case including a remote computer, the remote computer may be connected to a user computer through any type of network, including a local area network (LAN) or a wide area network (WAN); or may be connected to an external computer (for example, may be connected to the external computer through the Internet by using an Internet service provider).

It should be noted that the foregoing are merely example embodiments and applied technical principles of this application. A person skilled in the art may understand that this application is not limited to the specific embodiments described herein, and a person skilled in the art can make various obvious changes, adjustments, and replacements without departing from the protection scope of this application. Therefore, although this application is described in detail by using the foregoing embodiments, this application is not limited to the foregoing embodiments, and may further include more equivalent embodiments without departing from the concept of this application. All of the embodiments fall within the protection scope of this application.

## Claims

1. A road information identification method, comprising:
receiving road environment data of a plurality of modalities, wherein a road environment comprises an environment of a lane area and an environment of a lane-free area;
performing topology parsing based on the road environment data of the plurality of modalities, to obtain a lane-level topology connection relationship of a road, wherein the lane-level topology connection relationship of the road indicates a mutual location relationship between lanes on the road and a connection status of the lanes; and
determining road information of the road based on the lane-level topology connection relationship of the road.

2. The method according to claim 1, wherein the lane-level topology connection relationship of the road comprises:
a topology connection relationship between lanes in the lane area, a topology connection relationship between virtual lanes in the lane-free area, and a topology connection relationship between a lane in the lane area and a virtual lane in the lane-free area.

3. The method according to claim 2, wherein before the topology connection relationship between the virtual lanes in the lane-free area is obtained, and before the topology connection relationship between the lane in the lane area and the virtual lane in the lane-free area is obtained, the method further comprises:
determining the virtual lane in the lane-free area based on the multi-modality road environment.

4. The method according to claim 1, wherein the road environment data of the plurality of modalities comprises:
raw data of the road environment, sensing data of the road environment, and/or prior data of the road environment.

5. The method according to claim 4, wherein the performing topology parsing based on the road environment data of the plurality of modalities, to obtain a lane-level topology connection relationship of a road comprises:
fusing the road environment data of the plurality of modalities, to obtain fused data; and
performing topology parsing on the fused data to obtain the lane-level topology connection relationship of the road.

6. The method according to claim 1, wherein the determining road information of the road based on the lane-level topology connection relationship of the road comprises:
performing semantic parsing based on the road environment data of the plurality of modalities, to obtain lane-level semantic information of the road; and
combining the lane-level topology connection relationship of the road with the lane-level semantic information of the road, to obtain the road information of the road.

7. The method according to claim 6, wherein the road information of the road is obtained by using a road information model, and the road information model is obtained through training based on a neural network.

8. The method according to claim 7, wherein that the road information model is obtained through training based on a neural network comprises:
obtaining the road environment data and the road information corresponding to the road environment data in a training sample, wherein the road information is obtained through pre-labeling; and
training the road information model by using the road environment data in the training sample as input data for training the road information model, and by using the road information corresponding to the road environment data as expected output data for training the road information model, to obtain the road information model.

9. A road information identification apparatus, comprising:
a receiving module, configured to receive road environment data of a plurality of modalities, wherein a road environment comprises an environment of a lane area and an environment of a lane-free area;
a parsing module, configured to perform topology parsing based on the road environment data of the plurality of modalities, to obtain a lane-level topology connection relationship of a road, wherein the lane-level topology connection relationship of the road indicates a mutual location relationship between lanes on the road and a connection status of the lanes; and
a determining module, configured to determine road information of the road based on the lane-level topology connection relationship of the road.

10. The apparatus according to claim 9, wherein the lane-level topology connection relationship of the road in the parsing module specifically comprises:
a topology connection relationship between lanes in the lane area, a topology connection relationship between virtual lanes in the lane-free area, and a topology connection relationship between a lane in the lane area and a virtual lane in the lane-free area.

11. The apparatus according to claim 10, wherein before the topology connection relationship between the virtual lanes in the lane-free area is obtained, and before the topology connection relationship between the lane in the lane area and the virtual lane in the lane-free area is obtained, the apparatus further comprises:
determining the virtual lane in the lane-free area based on the multi-modality road environment.

12. The apparatus according to claim 9, wherein the road environment data of the plurality of modalities comprises:
raw data of the road environment, sensing data of the road environment, and/or prior data of the road environment.

13. The apparatus according to claim 12, wherein the parsing module is specifically configured to:
fuse the road environment data of the plurality of modalities, to obtain fused data; and
perform topology parsing on the fused data to obtain the lane-level topology connection relationship of the road.

14. The apparatus according to claim 9, wherein the determining module is specifically configured to:
perform semantic parsing based on the road environment data of the plurality of modalities, to obtain lane-level semantic information of the road; and
combine the lane-level topology connection relationship of the road with the lane-level semantic information of the road, to obtain the road information of the road.

15. The apparatus according to claim 14, wherein the road information of the road is obtained by using a road information model, and the road information model is obtained through training based on a neural network.

16. The apparatus according to claim 15, wherein that the road information model is obtained through training based on a neural network comprises:
obtaining the road environment data and the lane structure corresponding to the road environment data in a training sample, wherein the road information is obtained through pre-labeling; and
training the road information model by using the road environment data in the training sample as input data for training the road information model, and by using the road information corresponding to the road environment data as expected output data for training the road information model, to obtain the road information model.

17. An electronic device, comprising:
a processor and a memory, wherein
the memory stores program instructions, and when the program instructions are executed by the processor, the processor is enabled to perform the road information identification method according to any one of claims 1 to 8.

18. An electronic device, comprising:
a processor and an interface circuit, wherein
the processor is accessed through the interface circuit, the processor is configured to invoke program instructions stored in the memory, and when the program instructions are executed, the processor is enabled to perform the road information identification method according to any one of claims 1 to 8.

19. A vehicle, comprising a vehicle body and the electronic device according to claim 17 or 18.

20. A computer-readable storage medium, wherein the computer-readable storage medium stores program instructions, and when the program instructions are executed by a computer, the computer is enabled to perform the road information identification method according to any one of claims 1 to 8.
